# EUROPÄISCHE PATENTSCHRIFT

(11) **EP 0 483 629 B1**
(45) Veröffentlichungstag und Bekanntmachung des Hinweises auf die Patenterteilung: **06.04.1994**
(21) Anmeldenummer: 91117887.9
(22) Anmeldetag: 19.10.1991
(51) Int. Cl.: F02M 35/02, B01D 46/42

(54) **Ansaugluftfilter für Brennkraftmaschinen**
Intake air filter for combustion engines
Filtre à air d'aspiration pour moteurs à combustion

(30) Priorität: 27.10.1990 DE 4034216
(43) Veröffentlichungstag der Anmeldung: 06.05.1992
(73) Patentinhaber: DEERE & COMPANY, Moline, Illinois 61265 (US); FILTERWERK MANN & HUMMEL GMBH, D-71631 Ludwigsburg (DE)
(72) Erfinder: Behrendt, Bernhard, W-7141 Beilstein (DE); Benning, Friedrich, W-6830 Schwetzingen (DE); Ernst, Volker, W-7123 Sachsenheim (DE); Gelb, Herbert, W-6832 Hockenheim (DE); Klotz, Arthur, W-7148 Remseck (DE); Leipelt, Rudolf, W-7142 Marbach (DE); Scheuermann, Albert, W-6991 Igersheim (DE); Teich, Michael, W-6800 Mannheim 24 (DE)
(74) Vertreter: Feldmann, Bernhard

(56) Entgegenhaltungen:
- US-A- 4 006 000
- US-A- 4 278 455
- US-A- 4 350 509
- US-A- 4 704 143

## Beschreibung

Die Erfindung betrifft ein Ansaugluftfilter für Brennkraftmaschinen nach dem Oberbegriff des Patentanspruchs 1.

Aus der US-PS 40 06 000 ist ein Luftfilter bekannt mit einem im wesentlichen zylindrischen Gehäuse, welches einen Rohlufteinlaß aufweist, der tangential am Gehäuse angeordnet ist und wobei sich in diesem Gehäuse ein Filtereinsatz befindet, der radial durchströmt wird. Das Gehäuse selbst ist über einen Bajonettverschluß an einem zylinderförmigen Ansaugluftsammler anschließbar. In diesem Ansaugluftsammler befindet sich eine Sicherheitspatrone, die bei einem Wechseln des Filtereinsatzes ein Eindringen von Schmutz und Staub in den Ansaugluftstutzen verhindern soll.

Eine Abdichtung zwischen der Sicherheitspatrone und dem Filtereinsatz erfolgt dadurch, daß nach dem Einrasten des Bajonettverschlusses eine axiale Verschiebung des Filtereinsatzes in Richtung der Sicherheitspatrone erfolgt, durch welche die Stirnseite des Filtereinsatzes an der Stirnseite der Sicherheitspatrone zur Anlage kommt. Diese axiale Verschiebung wird mit einer an der Stirnwand angeordneten Verstellschraube vorgenommen, die eine axiale Bewegung auf die Endscheibe des Filtereinsatzes ausübt. Gleichzeitig wird durch diese axiale Verspannung der Bajonettverschluß verriegelt.

Ein Nachteil der bekannten Filtereinrichtung ist darin zu sehen, daß beim Auswechseln eines Filtereinsatzes mehrere Spannvorrichtungen gelöst werden müssen. Außerdem muß sowohl das Lösen dieser Spannvorrichtung als auch das Befestigen in einer bestimmten Reihenfolge durchgeführt werden.

Wird diese Reihenfolge nicht genau beachtet, das heißt, wird beim Einbau eines Filtereinsatzes zuerst mit der Verstellschraube der Filtereinsatz nach vorne bewegt und anschließend der Bajonettverschluß in Eingriff gebracht, so führt dies unweigerlich zu einer Zerstörung der Axialdichtung des Filtereinsatzes und damit zu einem Eintritt von Leckluft in den Reinluftraum.

Neben der umständlichen Handhabung benötigt die bekannte Filtereinrichtung auch durch die Anordnung der Verstellschraube viel Einbauraum, der in den meisten Anwendungsfällen äußerst knapp bemessen ist.

Es ist ferner aus dem DE-GM 14 76 531 ein Luftfilter bekannt, bei dem das gesamte Gehäuse auf einen Ansaugstutzen aufgeschoben wird und über einen Bajonettverschluß an diesem Ansaugstutzen befestigt wird.

Der Nachteil einer solchen Befestigungsart ist jedoch darin zu sehen, daß Schwingungen und Erschütterungen des Fahrzeugs, welches mit dem bekannten Luftfilter ausgestattet ist, dazu führen, daß der Bajonettverschluß sich löst bzw. - da ein Bajonettverschluß keine starre Verbindung ist - zu unkontrollierten Bewegungen des Luftfilters führt.

Es ist weiterhin aus der DE-OS 39 06 550 ein Flüssigkeitsfilter bekannt, bei dem ein becherförmiges Gehäuse über ein Spannband an einem Deckel befestigt ist. Ein solches Spannband ist zwar in der Lage, bei relativ kleinen Flüssigkeitsfiltern, beispielsweise bei Benzinfiltern, das Gehäuse dicht an den Deckel anzuschließen. Bei großvolumigen Luftfiltern reicht die von dem Spannband erzeugte axiale Kraftkomponente jedoch nicht aus, um eine Abdichtung des im Luftfiltergehäuse befindlichen Luftfiltereinsatzes sicherzustellen.

Durch die US-A-4,350,509 ist ein Einwegluftfilter bekannt geworden, welches einen beidseits, durch je einen Flansch verschlossenen Zylindermantel enthält. Einer der Flansche weist in seinem äußeren Bereich Durchtrittsöffnungen für den Lufteintritt auf. In dem Zylindermantel ist koaxial ein von einem Filterelement umgebenes perforiertes Innenrohr angeordnet. Das Innenrohr ist durch einen der Flansche axial herausgeführt. An der Durchtrittsstelle ist an den Flansch ein nach außen weisender plastischer Bund angeformt, an dessen Umfangsfläche eine Schneckengewindeschelle oder dergleichen angreift, um den Bund radial gegen das Innenrohr zu drücken und beide Teile luftdicht gegeneinander abzudichten. Das Innenrohr steht mit der Ansaugöffnung einer Maschine in Verbindung. Bei Verschmutzung wird das gesammte Einwegluftfilter, bestehend aus Filterelement, Zylindermantel, Flansche und Innenrohr ausgewechselt. Der Austausch lediglich des Filterelementes ist nicht vorgesehen.

Der Erfindung liegt die Aufgabe zugrunde, ein Ansaugluftfilter der eingangs genannten Art zu schaffen, welches bei geringstem Einbauraum eine einfach zu handhabbare Einrichtung zum Ankoppeln des einen Luftfiltereinsatz aufnehmenden Luftfiltergehäuses an ein Befestigungsteil aufweist.

Diese Aufgabe wird ausgehend von dem Oberbegriff des Hauptanspruch durch dessen kennzeichnende Merkmale gelöst.

Ein wesentlicher Vorteil dieser erfindungsgemäßen Lösung ist darin zu sehen, daß weder eine zusätzliche axiale Bewegung auf den Filtereinsatz noch eine Drehbewegung des Gehäuses bzw. des Filtereinsatzes beim Ein- bzw. Ausbauen erforderlich ist. Damit ist gewährleistet, daß Abdichtelemente an dem Filtereinsatz bzw. an dem Gehäuse oder an dem Befestigungsteil keine Scherkräfte aufnehmen müssen. Zum Befestigen bzw. Lösen des Gehäuses ist lediglich eine Bewegung des Überwurfrings um einen bestimmten Drehwinkelbereich erforderlich. Dies ist auch in den Fällen möglich, wo das Ansaugluftfilter nicht frei zugänglich ist, sondern unter beengten Platzverhältnissen ein- bzw. ausgebaut werden muß.

Es hat sich als vorteilhaft erwiesen und wird gemäß einer weiteren Ausgestaltung der Erfindung vorgeschlagen, den Überwurfring und das Befestigungsteil in den Bereichen, in denen sich die beiden Teile berühren, so zu gestalten, daß sich beim Lösen des Überwurfrings der Abstand zwischen den sich gegenüberliegenden Teilen vergrößert, so daß eine Ansammlung von Schmutz zwischen diesen beiden Teilen das Lösen des Überwurfringes nicht behindert.

Zusätzlich zu dieser Maßnahme wird gemäß einer Weiterbildung der Erfindung vorgeschlagen, an beiden Seiten des Überwurfrings Staubschutzschultern oder Labyrinthdichtungen vorzusehen, die zur Verhinderung des Eindringens von Staub in den Verschlußbereich von Befestigungsteil und Gehäuse beitragen.

Eine weitere Ausgestaltung der Erfindung sieht vor, den Überwurfring mit einem Schnapp- oder Hakenverschluß zu versehen, so daß dieser in seiner Schließstellung an dem Befestigungsteil eingehakt werden kann. Diese Maßnahme ist besonders dort zweckmäßig, wo sehr starke Rüttelbewegungen eventuell zu einem Lösen des Überwurfrings führen könnten.

Anstelle eines Schnapp- oder Hakenverschlusses besteht auch die Möglichkeit, den Überwurfring mit einem Rastelement zu versehen. Ein solches Rastelement ist beispielsweise eine Blattfeder, die auf einer sägezahnförmigen Rastung an dem Befestigungsteil oder dem Gehäuse aufliegt und welche an dem Überwurfring befestigt ist. Durch eine solche Rastung wird der Überwurfring in jeder beliebigen Winkelstellung fixiert. Beim Lösen des Überwurfrings ist lediglich ein Abheben der Feder erforderlich.

Eine weitere Variante zum Fixieren des Überwurfrings besteht darin, daß ein solches Rastelement als Griff ausgestaltet ist, wobei dieser Griff ein Gelenk aufweist und zum Befestigen des Gehäuses über das Gelenk in eine Raststellung gekippt wird und beim Lösen des Überwurfrings, zum Entfernen des Gehäuses in eine Lösestellung gekippt werden kann, wobei das Kippen sowohl in die Raststellung als auch in die Lösestellung allein durch die Kräfte, die auf den Ring zum Lösen bzw. Spannen wirken müssen, erfolgt.

Eine besonders vorteilhafte Variante zum Schwenken und Befestigen des Überwurfrings, die vor allem sehr robust aufgebaut ist, besteht darin, daß an dem Überwurfring ein Hebel angeordnet ist, mit welchem der Überwurfring gedreht werden kann und welcher in der Schließstellung in axialer Richtung schwenkbar ist und an einem Rastelement an dem Gehäuse einrastet. Der Hebel ist zweckmäßigerweise auf einer Achse befestigt. Die Achse ist wiederum an zwei Lagerstellen des Überwurfrings geführt. Um einen Toleranzausgleich zwischen der Schließstellung des Überwurfrings und dem Rastelement auf dem Gehäuse vorzunehmen, ist der Hebel in Achsrichtung zwischen den beiden Lagerstellen verschiebbar angeordnet und eine Druckfeder zwischen einer Lagerstelle und dem Hebel vorgesehen, welche auf den Hebel eine Kraft in Richtung der zweiten Lagerstelle ausübt.

Es hat sich als vorteilhaft erwiesen, eine zusätzliche Sicherung einzubauen, die verhindert, daß der Überwurfring geschlossen werden kann, wenn das Gehäuse noch nicht vollständig an dem Befestigungsteil anliegt. Hierzu besitzt eine an dem Überwurfring angeordnete Gewindeabschnittsfläche einen axial gerichteten Auslauf. Dieser blockiert die Bewegung des Überwurfrings, wenn die an dem Gehäuse angeordneten Nocken von der Anlage an dem Befestigungsteil noch entfernt sind.

Damit der Überwurfring in der Offenstellung verharrt und nicht durch das Eigengewicht des Hebels gedreht wird, ist an dem Überwurfring eine Rastfeder vorgesehen, welche beim Öffnen des Überwurfrings an einer Nase des Befestigungsteils einrastet.

Der in dem Ansaugluftfilter eingebaute Filtereinsatz (Patrone) weist an seiner dem Befestigungsteil zugewandten Stirnseite eine Wulstdichtung auf, diese kommt mit einer Anlagefläche des Befestigungsteils in Kontakt und dichtet damit den Reinluftraum ab. Die Patrone weist an dieser Stirnseite einen Befestigungskragen auf, der in die Nahtstelle zwischen Gehäuse und Befestigungsteil eingreift und gemeinsam mit dem Gehäuse an das Befestigungsteil angeklemmt wird.

Auf der gegenüberliegenden Seite ist die Patrone auf einen zylinderförmigen Ansatz des Gehäuses aufgesteckt. Die Gehäusewand und der Ansatz sind dabei so bemessen, daß eine geringe Längentoleranz der Patrone ohne Einfluß auf die Einbaufähigkeit derselben in das Gehäuse ist.

Der Überwurfring besteht gemäß einer zweckmäßigen Ausgestaltung der Erfindung aus zwei Halbschalen, die beispielsweise über Schraubverbindungen miteinander lösbar verbunden sind.

Zur Reduzierung der Reibung zwischen Überwurfring und Gehäuse ist der Überwurfring aus Polyamid und das Gehäuse und/oder das Befestigungsteil aus Polyproylen hergestellt.

Die Erfindung wird nachfolgend anhand von Ausführungsbeispielen näher erläutert.

Es zeigt
- Fig. 1: die Prinzipskizze eines Ansaugluftfilters in eingebautem Zustand in einem Längsschnitt,
- Fig. 2: eine Draufsicht auf das in Fig. 1 gezeigte Ansaugluftfilter,
- Fig. 3: die Detaildarstellung eines Rastelements,
- Fig. 3 A: eine Teildraufsicht der Fig. 3,
- Fig. 4: eine Variante eines Rastelements,
- Fig. 5: eine weitere Variante eines Rastelements,
- Fig. 6: das in Fig. 5 gezeigte Rastelement in einer Draufsicht,
- Fig. 7: eine Seitenansicht des Rastelements des Fig. 5.

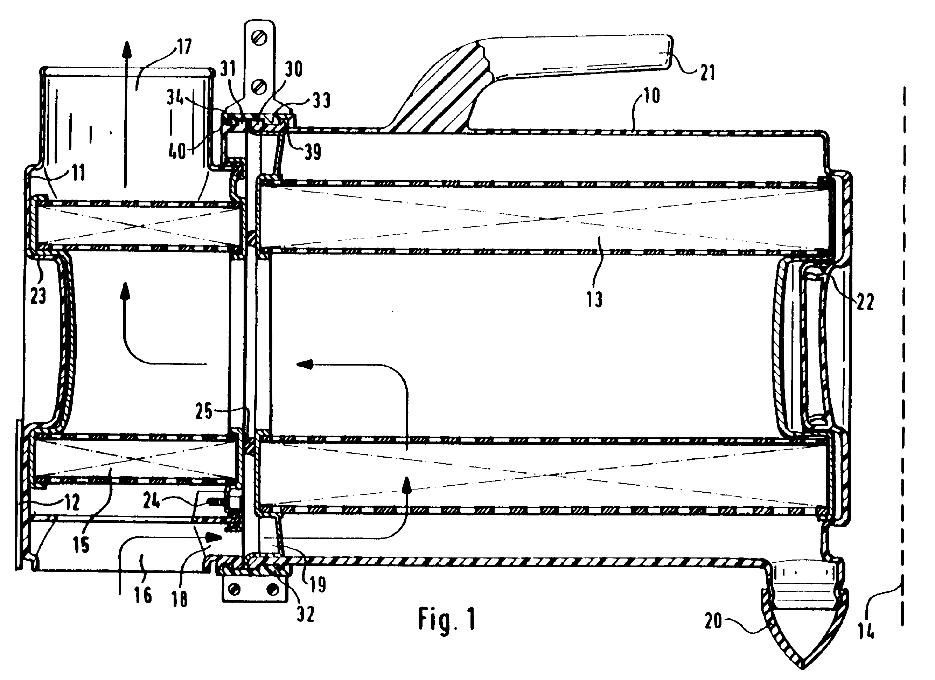

Das Ansaugluftfilter gemäß Figur 1 besteht im wesentlichen aus zwei Elementen. Ein Befestigungsteil 11 ist fest an einem Halteblech bzw. einer Montagewand 12 angeordnet. Das Befestigungsteil 11 ist zugleich Sicherheitspatronen-Gehäuse. An diesem Befestigungsteil 11 ist ein Gehäuse 10 in welches ein austauschbarer Filtereinsatz 13 einsteckbar ist, befestigt. Für das gesamte Ansaugluftfilter ist ein bestimmer Einbauraum vorgegeben, der durch die gestrichelt dargestellte Linie 14 begrenzt ist. Innerhalb des Befestigungsteils 11 befindet sich eine Sicherheitspatrone 15. Diese Sicherheitspatrone 15 verhindert beim Austauschen des Filtereinsatzes 13 das Eindringen von Schmutz in die Ansaugluftseite.

Sowohl das Gehäuse 10 als auch das Befestigungsteil 11 sind topfförmig ausgebildet, der Rohlufteinlaß 16 und der Reinluftauslaß 17 befinden sich an dem Befestigungsteil 11. Die Rohluft strömt über den Rohlufteinlaß 16 in dessen äußere Kammer 18, und von dort über ein Axialzyklon 19 in die äußere Kammer des Gehäuses 10. Nachdem die Luft den Filtereinsatz 13 passiert hat, strömt diese über die Sicherheitspatrone 15 zu dem Reinluftauslaß 17.

Das Gehäuse 10 ist mit einem Staubaustragventil 20 sowie mit einem Haltgriff 21 versehen. Der Filtereinsatz 13 ist an seinem geschlossenen Ende an einen im Gehäuse 10 vorgesehenen Ansatz 22 mit radialer Vorspannung aufgesteckt. Auch die Sicherheitspatrone 15 ist in dem Befestigungsteil 11 auf einem Ansatz 23 fixiert, wobei die Sicherheitspatrone 15 zusätzlich noch über eine Schraubverbindung 24 an dem Befestigungsteil 11 befestigt ist, so daß gewährleistet ist, daß die Sicherheitspatrone 15 nur in Ausnahmefällen entfernt wird. An der linksseitigen Stirnseite des Filtereinsatzes 13 befindet sich eine Radialdichtung 25. Diese dichtet den Zwischenraum zwischen Filtereinsatz 13 und Sicherheitspatrone 15 ab. Eine solche Abdichtung zeigt eine hohe Betriebssicherheit insbesondere auch bei Erschütterungen. Es ist jedoch auch ersichtlich, daß diese Art der Abdichtung nicht geeignet ist, Scherkräfte aufzunehmen. Deshalb erfolgt die Befestigung des Gehäuses 10 an dem Befestigungsteil 11 lediglich durch eine axiale Bewegung des Gehäuses 10 und eine axiale Verspannung.

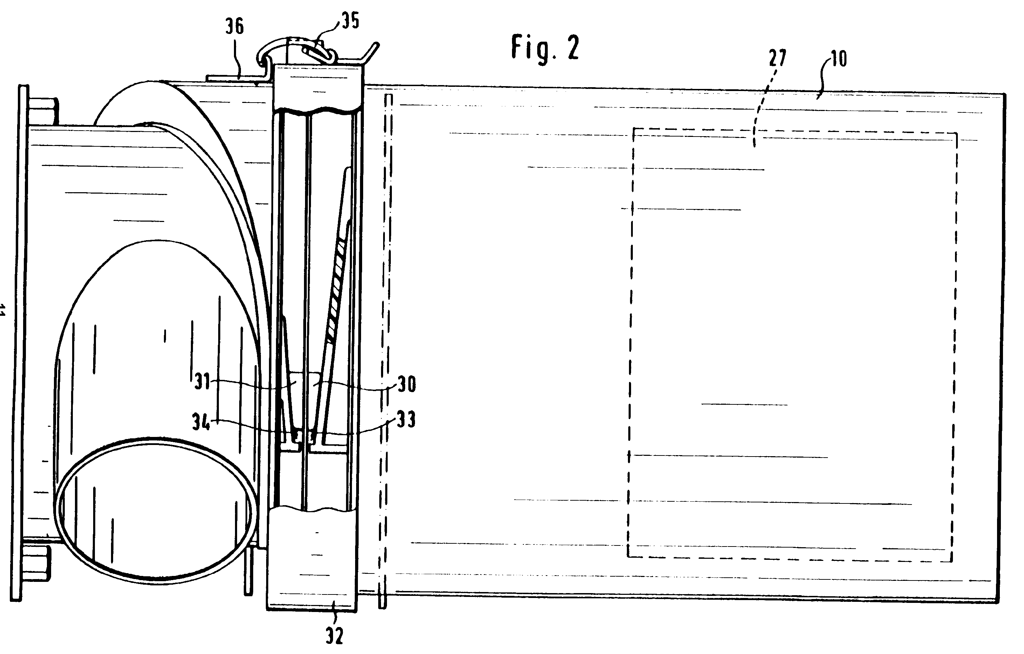

Die Befestigungselemente für das Gehäuse 10 sind in der Figur 2 dargestellt. Unterhalb des Gehäuses 10 befindet sich ein Auflager 27, auf welchem das Gehäuse 10 axial verschoben werden kann. Sowohl das Gehäuse 10 als auch das Befestigungsteil 11 trägt im Bereich der zusammenzufügenden Stirnflächen an dem jeweiligen Umfang Nocken 30, 31, die über den gesamten Umfang gleichmäßig verteilt sind. Die Nocken 30, 31 werden von einem Überwurfring 32 umschlossen. An diesem Überwurfring 32 sind keilförmig verlaufende Flächen (Gleitflächen 33, 34) vorgesehen, die ebenfalls mehrfach über den gesamten Umfang verteilt angeordnet sind. Ein Verdrehen des Überwurfrings 32 bewirkt somit in Verbindung mit den Nocken 30, 31 und den Gleitflächen 33, 34 eine Befestigung des Gehäuses 10 an dem Befestigungsteil 11. Diese Befestigungsart vermeidet sowohl eine Drehbewegung des Gehäuses 10 als auch eine radiale Bewegung des Gehäuses 10, so daß keinerlei Scherwirkung auf die Radialdichtung 25 entsteht.

Die Länge des Nockens 30 beträgt etwa 1/4 der Länge der Gleitfläche 33. Dadurch wird ein sehr geringer Keilwinkel der Gleitfläche erzielt. Dies hat den Vorteil, daß der Überwurfring 32 selbsthemmend wirkt und damit im Normalfall keiner zusätzlichen Sicherung gegen unbeabsichtigtes Lösen bedarf. Treten jedoch sehr starke Erschütterungen auf, wie dies beispielsweise bei Nutzfahrzeugen der Fall ist, dann ist es zweckmäßig, den Überwurfring 32 zusätzlich gegen unbeabsichtigtes Lösen abzusichern. Hierzu ist auf dem Überwurfring 32 ein Hakenverschluß 35 vorgesehen. Dieser Hakenverschluß 35 greift in eine Lasche 36, welche an dem Befestigungsteil 11 angebracht ist und sichert damit den Überwurfring 32.

Im Bereich der beiden Stirnseiten des Überwurfrings 32 befinden sich Staubschutzschultern, diese sind aus Stegen 39, 40 die an Gehäuse 10 und Befestigungsteil 11 angeordnet sind und in Aussparungen des Überwurfrings 32 eingreifen, gebildet.

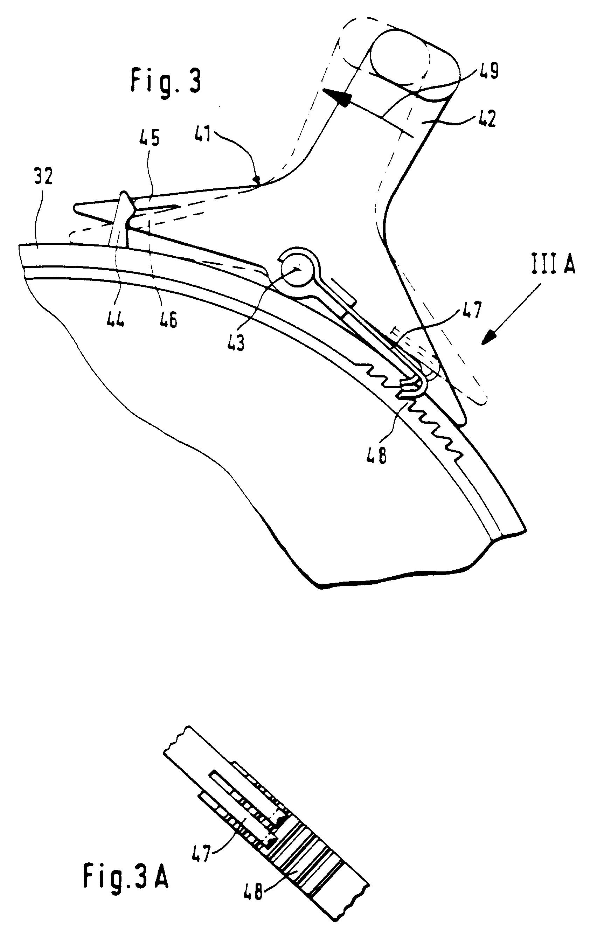

Figur 3 zeigt ein Rastelement, das ebenfalls zum Absichern des Überwurfrings 32 gegen unbeabsichtigtes Lösen geeignet ist. Hierzu ist auf dem Überwurfring 32 ein Griff 42 vorgesehen. Dieser Griff 42 ist um einen Drehpunkt 43 kippbar und rastet über einen Rastnocken 44 in eine Schließstellung 45 und in eine gestrichelt dargestellte Lösestellung 46 ein. An diesem Griff 42 befindet sich eine Blattfeder 47, deren Ende hakenförmig ausgebildet ist und die in eine Verzahnung 48, die auf dem Gehäuse 10 und/oder auf dem Befestigungsteil 11 angeordnet ist, einrastet.

Die Blattfeder 47 kann, wie in Figur 3 A gezeigt, geschlitzt aufgeführt sein, wobei dann die beiden hakenförmigen Enden der Blattfeder 47 unterschiedliche Längen aufweisen. Diese Ausführung hat den Vorteil, daß trotz einer groben Verzahnung eine Rastung möglich ist, die der halben Verzahnungsteilung entspricht. Wird der Griff 42 in die Lösestellung bewegt (gestrichelt dargestellt), dann löst sich die Blattfeder 47 aus der Verzahnung 48 heraus, und der Überwurfring 32 kann durch Bewegen in Richtung des Pfeiles 49 geöffnet werden.

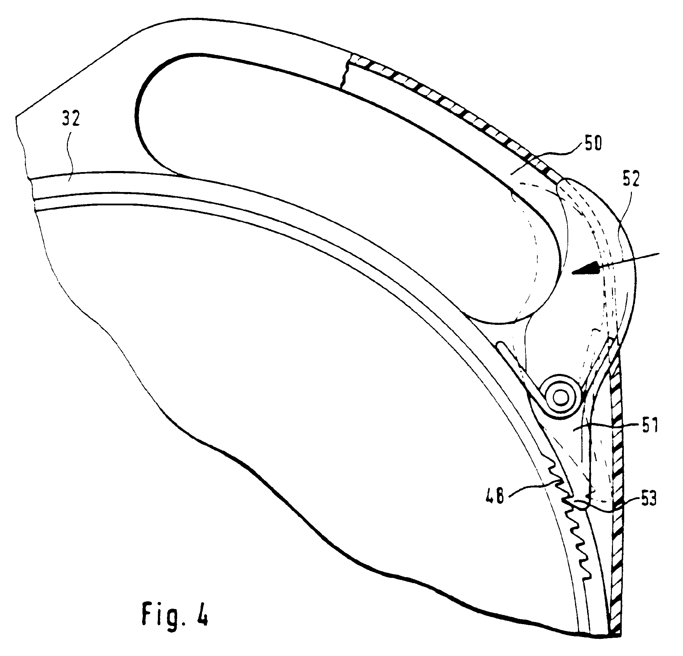

Eine weitere Variante eines Rastelementes zeigt Figur 4. Auch hier befindet sich auf dem Gehäuse 10 oder auf dem Befestigungsteil 11 eine Verzahnung 48. Der auf dem Überwurfring 32 befindliche Griff 50 ist mit einem federnd gelagerten Hakenteil 51 versehen. Dieses Hakenteil 51 greift in die Verzahnung 48 ein. Zum Lösen des Überwurfrings 32 wird das Hakenteil 51 nach unten in Richtung des Pfeiles 52 bewegt, so daß der Haken 53 aus der Verzahnung 48 gelöst wird und eine Drehung des Überwurfrings 32 möglich ist.

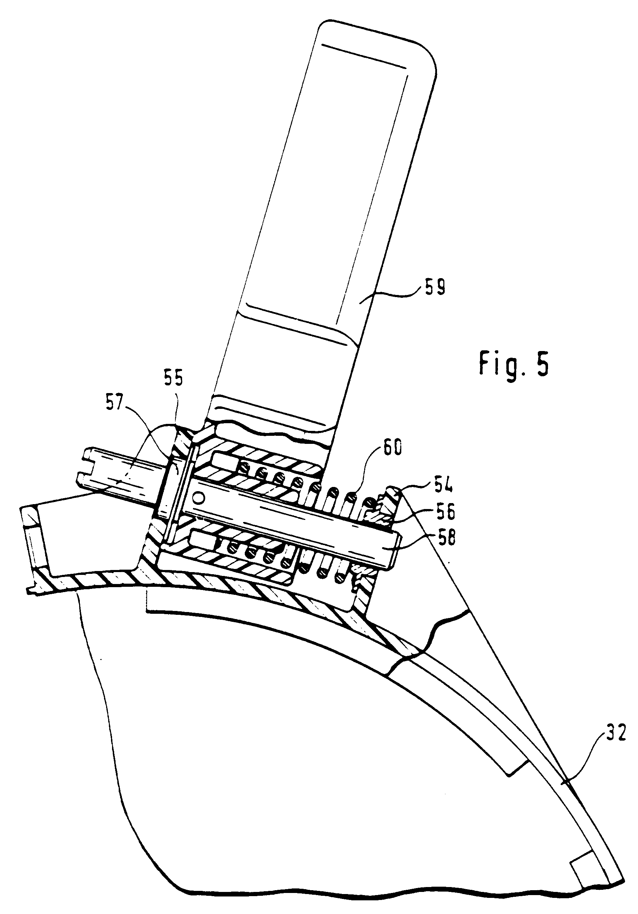

Anstelle der in den Figuren 2, 3 und 4 gezeigten Rastelemente kann der Überwurfring 32, wie in Figur 5, 6 und 7 gezeigt, auch durch einen umlegbaren und einrastbaren Hebel in der Schließstellung, unter Feder-Vorspannung, gehalten werden.

Auf dem Überwurfring 32, der in Figur 5 ohne das Gehäuse 10 dargestellt ist, sind zwei Lagerstellen 54, 55 angeformt und diese mit Buchsen 56, 57 versehen. In diesen Buchsen 56, 57 ist ein Stift 58 geführt, auf dem ein Hebel 59 befestigt ist.

Der Hebel 59 ist innerhalb der beiden Lagerstellen 54, 55 verschiebbar. Eine Druckfeder 60 übt eine längs der Stiftachse gerichtete Kraft auf den Hebel 59 aus, so daß dieser im Ruhezustand an der Lagerstelle 55 zur Anlage kommt. Die hier gezeichnete Stellung des Hebels 59 ist die Offenstellung, das heißt, der Bajonettring kann mittels des Griffs 59 gedreht werden. Für das Bewegen des Überwurfrings 32 ist die Art der Lagerung des Hebels 59 unerheblich.

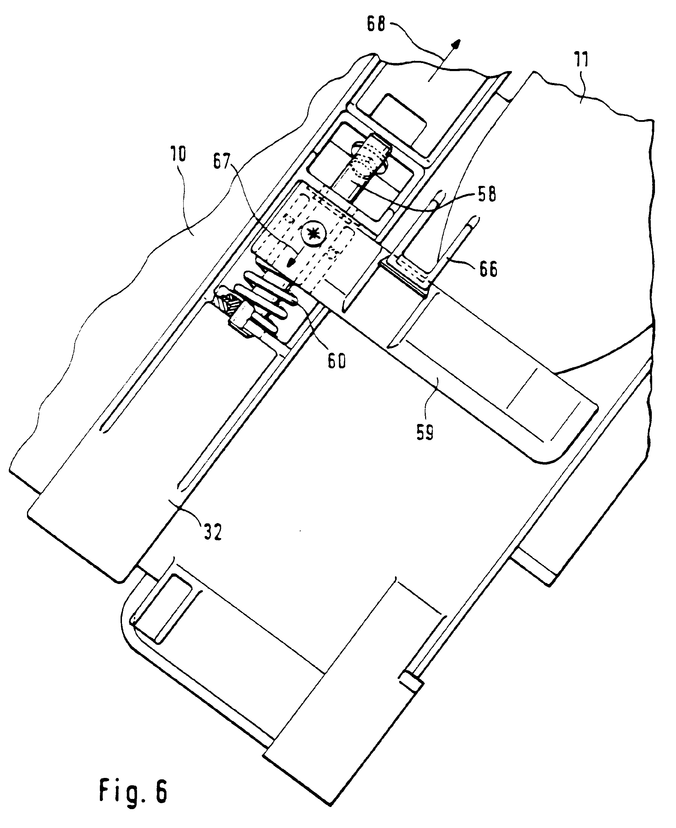

Die Funktion dieser Lagerung wird anhand der Figur 6 näher erläutert. Diese Figur zeigt in einer Draufsicht einen Teil des Gehäuses 10 des Befestigungsteils 11 und den Überwurfring 32. Der Überwurfring 32 und der Hebel 59 befinden sich in der Schließstellung.

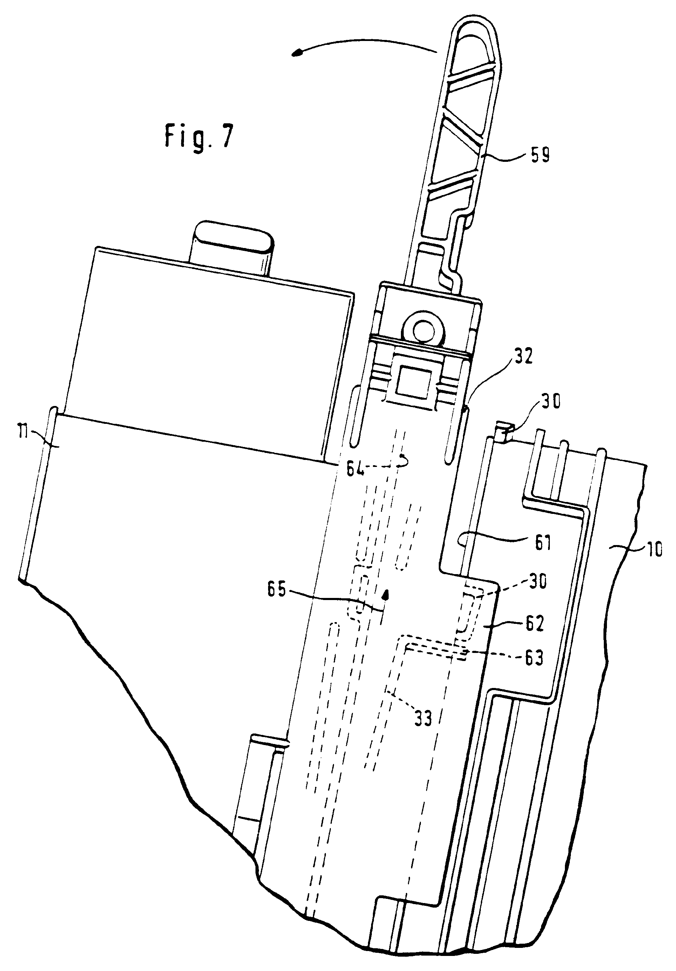

In Figur 7 ist nochmals das Gehäuse 10, das Befestigungsteil 11 und der Überwurfring 32 mit dem Hebel 59 in einer Seitenansicht dargestellt.

Das Gehäuse 10 ist noch nicht vollständig an das Befestigungsteil 11 angelegt. Die Anlagefläche 61 befindet sich noch außerhalb des Überwurfrings 32. Allerdings ist der Überwurfring 32 an wenigstens einer Stelle mit einer axialen Auskragung 62 versehen, welche mit einem Auslauf 63 der Gewindeabschnittsfläche 33 versehen ist.

In Verbindung mit dem Nocken 30 an dem Gehäuse 10, wird, solange das Gehäuse 10 nicht vollständig mit seiner Anlagefläche 61 an der Anlagefläche 64 des Befestigungsteils 11 anliegt, ein Schließen des Überwurfrings 32 in Richtung des Pfeils 65 verhindert. Erst wenn das Gehäuse 10 an dem Befestigungsteil 11 anliegt, wird der Auslauf 63 in Verbindung mit dem Nocken 30 unwirksam. Der Nocken 30 greift hinter die Gleitfläche 33, der Überwurfring 32 kann in Richtung des Pfeiles 65 bewegt werden, um damit das Gehäuse 10 an dem Befestigungsteil 11 zu fixieren.

Nachdem der Überwurfring 32 in die Schließstellung bewegt wurde, kann der Hebel 59 in Richtung des Befestigungsteils 11 umgelegt werden. Auf dem Befestigungsteil 11 befindet sich ein Rastelement 66, in welches der Hebel 59 einrastet. Herstellungsbedingt kann die Position des Hebels 59 in Umfangsrichtung in der Schließstellung geringe Abweichungen von der Normallage bzw. von der Soll-Lage aufweisen.

Damit diese Toleranzen nicht dazu führen, daß diese Schließstellung und damit das Einrasten des Hebels 59 an dem Rastelement 66 nicht erreicht werden kann, oder daß zwar der Hebel 59 eingerastet werden kann, aber noch ein geringer Luftspalt zwischen Gehäuse 10 und Befestigungsteil 11 besteht, ist der Hebel 59 über den Stift 58 axial verschiebbar gelagert, wobei die Druckfeder 60 gewährleistet, daß innerhalb einer gewissen Lagetoleranz des Überwurfrings 32, der Hebel 59 wirksam an dem Rastelement 66 einrastet und ein Lösen des Hebels 59 nur entgegen der Kraft der Druckfeder 60 möglich ist.

Zum Bewegen des Überwurfrings 32 in die Offenstellung wird der Hebel 59 zunächst entgegen der Wirkung der Druckfeder 60 in Richtung des Pfeils 67 bewegt und anschließend nach oben geschwenkt.

Damit nimmt der Nebel 59 seine in Figur 5 gezeigte Stellung ein, und der Überwurfring 32 kann in Richtung des Pfeils 68 mittels des Hebels 59 bewegt werden, bis die Offenstellung erreicht ist.

## Patentansprüche

1. Ansaugluftfilter für Brennkraftmaschinen, bestehend aus einem topfförmigen Gehäuse (10) und einem Befestigungsteil (11) für das Gehäuse, einem Rohlufteinlaß (16) und einem Reinluftauslaß (17), sowie einem im Gehäuse (10) angeordneten Filtereinsatz (13), dadurch gekennzeichnet, daß das Befestigungsteil (11) an der dem Gehäuse (10) zugewandten rohrförmigen Öffnung einen Überwurfring (32) trägt, welcher gegenüber dem Befestigungsteil (11) drehbar angeordnet ist, daß das Gehäuse (10) an der Außenseite im Bereich der dem Befestigungsteil (11) zugewandten Öffnung Nocken (30) trägt, wobei zum Befestigen des Gehäuses (10) der Überwurfring (32) über die Nocken (30) greift und die im Überwurfring (32) vorgesehenen, den Nocken (30) zugewandten Gewindeabschnittsflächen (33) eine Umfangssteigung aufweisen, so daß mittels einer Drehbewegung des Überwurfrings (32) das Gehäuse (10) an dem Befestigungsteil (11) lösbar verbindbar ist.

2. Ansaugluftfilter für Brennkraftmaschinen nach Anspruch 1, dadurch gekennzeichnet, daß der Überwurfring (32) auf der dem Befestigungsteil (11) zugewandten Seite in Umfangsrichtung keilförmig verlaufende Gleitflächen (34) aufweist und an dem Befestigungsteil (11) Nocken (31) vorgesehen sind, welche mit den Gleitflächen (34) in Verbindung stehen.

3. Ansaugluftfilter für Brennkraftmaschinen nach Anspruch 1 oder 2, dadurch gekennzeichnet, daß auf Befestigungsteil (11) und Gehäuse (10) ringförmig umlaufende Staubschutzschultern (39, 40) vorgesehen sind, die als seitliche Abdeckung und damit als Staubschutz für die lösbare Verbindung von Befestigungsteil (11) und Gehäuse (10) dienen.

4. Ansaugluftfilter für Brennkraftmaschinen nach einem der vorherigen Ansprüche, dadurch gekennzeichnet, daß auf dem Überwurfring (32) wenigstens ein axial wirkender, quer zur Spannrichtung des Überwurfrings (32) angeordneter Schnappverschluß oder Hakenverschluß (35) vorgesehen ist, mit welchem der Überwurfring (32) in seiner Winkellage gegenüber dem Befestigungsteil (11) festklemmbar ist.

5. Ansaugluftfilter für Brennkraftmaschinen nach einem der vorherigen Ansprüche, dadurch gekennzeichnet, daß auf dem Überwurfring (32) ein Rastelement (41) angeordnet ist und auf dem Umfang des Befestigungsteils (11) und/oder des Gehäuses (10) sägezahnförmige Rastbereiche (48) angeordnet sind, in welche das Rastelement (41) eingreift und wodurch die Winkellage des Überwurfrings (32) bei befestigtem Gehäuse fixiert ist.

6. Ansaugluftfilter für Brennkraftmaschinen nach Anspruch 5, dadurch gekennzeichnet, daß das Rastelement (41) mit einem Griff (42) versehen ist, welcher mit einem Gelenk (43) ausgestattet ist und beim Befestigen des Gehäuses (10) in eine Raststellung gekippt wird und beim Lösen des Überwurfrings (32) zum Entfernen des Gehäuses (10) in eine Lösestellung gekippt wird, wobei in dieser Stellung das Rastelement (41) von den Rastbereichen (48) abgehoben ist.

7. Ansaugluftfilter für Brennkraftmaschinen nach einem der vorherigen Ansprüche 1 bis 4, dadurch gekennzeichnet, daß der Überwurfring (32) mit einer Klemmeinrichtung versehen ist, welche mittels eines am Überwurfring (32) angeordneten Griffs (50) bedient wird, und mit welcher ein Verspannen des Überwurfrings (32) mit dem Befestigungsteil (11) vorgenommen wird.

8. Ansaugluftfilter für Brennkraftmaschinen nach einem der Ansprüche 1 bis 4, dadurch gekennzeichnet, daß der Überwurfring (32) mit einem Hebel (59) versehen ist, welcher in axialer Richtung schwenkbar ist, und daß auf dem Befestigungsteil (11) ein Rastelement (66) vorgesehen ist, in welches der Hebel (59) in der Schließstellung des Überwurfrings (32) einrastbar ist.

9. Ansaugluftfilter für Brennkraftmaschinen nach Anspruch 8, dadurch gekennzeichnet, daß der Hebel (59) mittels einer Achse (58) an dem Überwurfring (32) befestigt ist, wobei die Achse (58) an zwei Lagerstellen (54, 55) des Überwurfrings (32) axial beweglich geführt ist, und wobei auf der Achse (58) eine Druckfeder (60) vorgesehen ist, die zwischen einer Lagerstelle (54) und dem Hebel (59) zum Toleranzausgleich zwischen Überwurfring (32) und Rastelement (66) eingespannt ist.

10. Ansaugluftfilter für Brennkraftmaschinen nach einem der vorherigen Ansprüche, dadurch gekennzeichnet, daß wenigstens eine der auf dem Überwurfring (32) angeordneten und dem Gehäuse (10) zugewandten Gewindeabschnittsflächen (33) einen axial gerichteten Auslauf (63) aufweist, der ein Schließen des Überwurfrings (32) bei nicht ordnungsgemäß angelegtem Gehäuse (10) verhindert.

11. Ansaugluftfilter nach einem der vorherigen Ansprüche, dadurch gekennzeichnet, daß an dem Überwurfring (32) eine Rastfeder (47) vorgesehen ist, welche in der Offenstellung des Überwurfrings (32) an einer Rastnase (48) des Befestigungsteils (11) aufliegt.

12. Ansaugluftfiter für Brennkraftmaschinen nach einem der vorherigen Ansprüche, dadurch gekennzeichnet, daß der Filtereinsatz (13) an seiner dem geschlossenen Ende des Gehäuses (10) zugewandten Seite auf einem Ansatz (22) des Gehäuses (10) axial verschiebbar befestigt ist und an einer gegenüberliegenden Stirnseite eine Wulstdichtung (25) trägt, die an seiner Anlagefläche des Befestigungsteils (11) anliegt und den Rohluftraum (16) von dem Reinluftraum (17) abdichtet.

13. Ansaugluftfilter für Brennkraftmaschinen nach Anspruch 12, dadurch gekennzeichnet, daß der Ansatz (22) des Gehäuses (10) eine zylindrische Führungsfläche aufweit, die sich in den Innenbereich des Filtereinsatzes (13) erstreckt und auf welcher der Filtereinsatz (13) mit einer Stützfläche aufliegt und daß an der gegenüberliegenden Seite des Filtereinsatzes (13) dieser einen Befestigungskragen aufweist, der bis an die äußere Kontaktstelle zwischen Gehäuse (10) und Befestigungsteil (11) reicht und zwischen Gehäuse (10) und Befestigungsteil (11) eingespannt ist.

14. Ansaugluftfilter für Brennkraftmaschinen nach einem der vorherigen Ansprüche, dadurch gekennzeichnet, daß der Überwurfring (32) aus zwei Halbschalen besteht, die lösbar miteinander verbunden sind.

## Claims

1. An air inlet filter for internal combustion engines, consisting of a pot-shaped housing (10) and an attachment part (11) for the housing, a raw air inlet (16) and a clean air outlet (17), and a filter element (13) arranged in the housing (10), characterized in that the attachment part (11) carries a coupling ring (32) on the tubular opening facing the housing (10), the ring being rotatable relative to the attachment part (11), in that the housing (10) carries bosses (30) on the outside in the region of the opening facing the attachment part (11), wherein the coupling ring (32) engages over the bosses (30) for fixing the housing (10) and the thread portion surfaces (33) provided in the coupling ring (32) facing the bosses (30) have a circumferential inclination so that the housing (10) can be coupled releasably to the attachment part (11) by means of a rotary movement of the coupling ring (32).

2. An air inlet filter for internal combustion engines according to claim 1, characterized in that the coupling ring (32) has wedge-form sliding surfaces (34) running in the circumferential direction on the side facing the attachment part (11) and bosses (31) are provided on the attachment part (11) with which the sliding surfaces (34) are in engagement.

3. An air inlet filter for internal combustion engines according to claim 1 or 2, characterized in that annular, peripheral dust protection collars (39, 40) are provided on the attachment part (11) and the housing (10) and serve as a side covering and thus as dust protection for the releasable coupling of the attachment part (11) and housing (10).

4. An air inlet filter for internal combustion engines according to any of the preceding claims, characterized in that at least one snap connector or hook connector (35) is provided on the coupling ring (32), acting axially and transverse to the tightening direction of the coupling ring (32) and through which the coupling ring (32) can be clamped firmly in its angular position relative to the attachment part (11).

5. An air inlet filter for internal combustion engines according to any of the preceding claims, characterized in that a detent element (41) is arranged on the coupling ring (32) and sawtooth detent regions (48) are provided on the periphery of the attachment part (11) and/or the housing (10), in which the detent element (41) engages and whereby the angular position of the coupling ring (32) is fixed with the housing attached.

6. An air inlet filter for internal combustion engines according to claim 5, characterized in that the detent element (41) is provided with a handle (42) with a pivot (43) and is tilted into a latching position on fixing the housing (10) and is tilted into a release position on releasing the coupling ring (32) for removing the housing (10), the detent element (41) being lifted off the detent regions (48) in this latter position.

7. An air inlet filter for internal combustion engines according to any of the preceding claims 1 to 4, characterized in that the coupling ring (32) is provided with a clamping device which is actuated by a handle (50) arranged on the coupling ring (32) and with which tightening of the coupling ring (32) on the attachment part (11) is effected.

8. An air inlet filter for internal combustion engines according to any of the preceding claims 1 to 4, characterized in that the coupling ring (32) is provided with a lever (59) which can be swung in the axial direction and in that a locking element (66) is provided on the attachment part (11), with which the lever (59) can engage in the closed position of the coupling ring (32).

9. An air inlet filter for internal combustion engines according to claim 8, characterized in that the lever (59) is fixed to the coupling ring (32) by means of a spindle (58), wherein the spindle (58) is guided for axial movement at two bearing points (54, 55) of the coupling ring (32) and wherein a compression spring (60) is provided on the spindle (58) and is biased between one bearing point (54) and the lever (59) for tolerance compensation between the coupling ring (32) and the locking element (66).

10. An air inlet filter for internal combustion engines according to any of the preceding claims, characterized in that at least one of the thread portion surfaces (33) arranged on the coupling ring (32) and facing the housing (10) has an axially directed run-out (63), which prevents closure of the coupling ring (32) with the housing (10) incorrectly fitted.

11. An air inlet filter according to any of the preceding claims, characterized in that a detent spring (47) is provided on the coupling ring (32) and bears on a detent nose of the attachment part (11) in the open position of the coupling ring (32).

12. An air inlet filter for internal combustion engines according to any of the preceding claims, characterized in that the filter elements (13) is fixed at its end facing the closed end of the housing (10) axially slidably on an extension (22) of the housing and carries a sealing bead (25) at an opposite end, which bears on a bearing surface of the attachment part (11) and seals off the raw air space (16) from the clean air space (17).

13. An air inlet filter for internal combustion engines according to claim 12, characterized in that the extension (22) of the housing (10) has a cylindrical guide surface which extends into the inner region of the filter element (13) and on which a support surface of the filter elements (13) bears, and in that the filter element has a fixing collar on its opposite side, which extends up to the outer contact point between the housing (10) and the attachment part (11) and is tightened between the housing (10) and the attachment part (11).

14. An air inlet filter for internal combustion engines according to any of the preceding claims, characterized in that the coupling ring (32) consists of two half-shells, which are releasable connected together.

## Revendications

1. Filtre à air d'admission pour moteurs à combustion interne, constitué d'un boîtier (10) en forme de pot et d'un élément de fixation (11) pour le boîtier, d'une entrée d'air impur (16) et d'une sortie d'air purifié (17), ainsi que d'un élément filtrant (13) disposé dans le boîtier (10), **caractérisé** en ce que l'élément de fixation (11) porte, à son ouverture tubulaire tournée vers le boîtier (10), une bague d'accouplement (32) qui est disposée à rotation par rapport à l'élément de fixation (11), et en ce que le boîtier (10) porte des ergots (30) sur son côté extérieur, dans la région de son ouverture tournée vers l'élément de fixation (11), la bague d'accouplement (32) s'engageant sur les ergots (30) en vue de la fixation du boîtier (10), et des surfaces partielles de filetage (33), prévues dans la bague d'accouplement (32) et tournées vers les ergots (30), présentant une pente circonférentielle, de sorte que le boîtier (10) peut être assemblé de manière amovible à l'élément de fixation (11) au moyen d'un mouvement de rotation de la bague d'accouplement (32).

2. Filtre à air d'admission pour moteurs à combustion interne selon la revendication 1, **caractérisé** en ce que la bague d'accouplement (32) présente, sur son côté tourné vers l'élément de fixation (11), des surfaces de glissement (34) se développant en forme de coin en direction circonférentielle, et des ergots (31), qui coopèrent avec les surfaces de glissement (34), sont prévus sur l'élément de fixation (11).

3. Filtre à air d'admission pour moteurs à combustion interne selon la revendication 1 ou 2, **caractérisé** en ce que des épaulements cache-poussière (39, 40) sont prévus respectivement sur l'élément de fixation (11) et sur le boîtier (10) en en faisant annulairement le tour, ces épaulements servant d'élément de recouvrement latéral et donc de cache-poussière pour l'assemblage amovible de l'élément de fixation (11) et du boîtier (10).

4. Filtre à air d'admission pour moteurs à combustion interne selon l'une quelconque des revendications précédentes, **caractérisé** en ce qu'au moins une fermeture à déclic ou une fermeture à crochet (35), agissant axialement et disposée transversalement à la direction de serrage de la bague d'accouplement (32), est prévue sur la bague d'accouplement (32) et permet de bloquer par serrage la bague d'accouplement (32) dans sa position angulaire par rapport à l'élément de fixation (11).

5. Filtre à air d'admission pour moteurs à combustion interne selon l'une quelconque des revendications précédentes, **caractérisé** en ce qu'un élément de crantage (41) est disposé sur la bague d'accouplement (32) et des régions de crantage (48) en dents de scie sont disposées sur la périphérie de l'élément de fixation (11) et/ou du boîtier (10), régions dans lesquelles s'engage l'élément de crantage (41), fixant ainsi la position angulaire de la bague d'accouplement (32) lorsque le boîtier est fixé.

6. Filtre à air d'admission pour moteurs à combustion interne selon la revendication 5, **caractérisé** en ce que l'élément de crantage (41) comporte une poignée (42), qui est pourvue d'une articulation (43) et est basculée dans une position de crantage lors de la fixation du boîtier (10) et dans une position de libération lors du desserrage de la bague d'accouplement (32) en vue de déposer le boîtier (10), l'élément de crantage (41) étant dégagé des régions de crantage (48) dans cette position de libération.

7. Filtre à air d'admission pour moteurs à combustion interne selon l'une quelconque des revendications précédentes, **caractérisé** en ce que la bague d'accouplement (32) est pourvue d'un mécanisme de serrage, qui est manoeuvré au moyen d'une poignée (50) disposée sur la bague d'accouplement (32) et au moyen duquel la bague d'accouplement (32) est assemblée avec serrage à l'élément de fixation (11).

8. Filtre à air d'admission pour moteurs à combustion interne selon l'une quelconque des revendications 1 à 4, **caractérisé** en ce que la bague d'accouplement (32) est pourvue d'un levier (59) pouvant être pivoté en direction axiale, et en ce qu'un élément de crantage (66) est prévu sur l'élément de fixation (11), élément de crantage dans lequel peut être enclenché le levier (59) dans la position de fermeture de la bague d'accouplement (32).

9. Filtre à air d'admission pour moteurs à combustion interne selon la revendication 8, **caractérisé** en ce que le levier (59) est fixé au moyen d'un axe (58) sur la bague d'accouplement (32), l'axe (58) étant guidé en mobilité axiale dans deux paliers (54, 55) de la bague d'accouplement (32) et un ressort de compression (60) étant prévu sur l'axe (58), ressort qui est serré entre un palier (54) et le levier (59) pour la compensation des tolérances entre la bague d'accouplement (32) et l'élément de crantage (66).

10. Filtre à air d'admission pour moteurs à combustion interne selon l'une quelconque des revendications précédentes, **caractérisé** en ce qu'au moins une des surfaces partielles de filetage (33), disposées sur la bague d'accouplement (32) et tournées vers le boîtier (10), présente une partie terminale (63) orientée axialement, qui empêche la fermeture de la bague d'accouplement (32) lorsque le boîtier (10) n'est pas correctement posé.

11. Filtre à air d'admission pour moteurs à combustion interne selon l'une quelconque des revendications précédentes, **caractérisé** en ce qu'un ressort de crantage (47) est prévu sur la bague d'accouplement (32), ressort qui repose sur un ergot de crantage (48) de l'élément de fixation (11).

12. Filtre à air d'admission pour moteurs à combustion interne selon l'une quelconque des revendications précédentes, **caractérisé** en ce que l'élément filtrant (13) est fixé à translation axiale, sur son côté tourné vers l'extrémité fermée du boîtier (10), sur un appendice (22) du boîtier (10), et porte, sur son côté frontal opposé, un bourrelet d'étanchéité (25) qui s'appuie contre la face d'application correspondante de l'élément de fixation (11) et assure une fermeture étanche entre l'espace d'air impur (16) et l'espace d'air purifié (17).

13. Filtre à air d'admission pour moteurs à combustion interne selon la revendication 12, **caractérisé** en ce que l'appendice (22) du boîtier (10) présente une face de guidage cylindrique, qui s'étend dans la région intérieure de l'élément filtrant (13) et sur laquelle l'élément filtrant (13) repose par une face d'appui, et en ce que l'élément filtrant (13) présente, sur son côté opposé, un collet de fixation qui s'étend jusqu'au point de contact extérieur entre le boîtier (10) et l'élément de fixation (11) et est serré entre le boîtier (10) et l'élément de fixation (11).

14. Filtre à air d'admission pour moteurs à combustion interne selon l'une quelconque des revendications précédentes, **caractérisé** en ce que la bague d'accouplement (32) est constituée de deux demi-coques qui sont mutuellement assemblées de manière amovible.
